(19) Europäisches Patentamt

European Patent Office

Office européen des brevets

(11) EP 0 755 767 A1

(12) EUROPEAN PATENT APPLICATION
published in accordance with Art. 158(3) EPC

(43) Date of publication:
29.01.1997 Bulletin 1997/05

(51) Int. Cl.$^6$: B29C 45/56, B29C 45/26, H04M 1/02

(21) Application number: 96911823.1

(22) Date of filing: 09.02.1996

(86) International application number:
PCT/JP96/00290

(87) International publication number:
WO 96/26063 (29.08.1996 Gazette 1996/39)

(84) Designated Contracting States:
AT BE CH DE DK ES FR GB GR IE IT LI LU MC NL PT SE

(30) Priority: 10.02.1995 JP 22977/95

(71) Applicant: POLYPLASTICS CO. LTD.
Osaka-shi, Osaka 541 (JP)

(72) Inventors:
• OKADA, Tsuneyoshi
Kawasaki-shi Kanagawa 213 (JP)
• MIYAZAKI, Hirotaka
Shizuoka 416 (JP)

(74) Representative: Jackson, Peter et al
HYDE, HEIDE & O'DONNELL
10-12 Priests Bridge
London SW15 5JE (GB)

(54) METHOD FOR INJECTION MOLDING A THIN HOUSING FOR A PORTABLE TELEPHONE

(57) To manufacture a thin-walled housing for a cellular phone having an extremely high strength and high-quality surfaces with no molding sinks at a high yield rate, resin is first injected into a cavity 31 through a pin gate 4 of a front mold 1 as shown in Fig. 3. Secondly, while the resin is still in a molten state, projectable members 28 are thrust into the cavity 31, thus punching push button holes and pushing the top ends thereof and the removed resin into slide holes 12 and the pin gate 4. At the same time, tap hole forming pins in boss forming holes 29 are pushed slightly further into the cavity 31. After cooling the resin to solidification, the front and rear molding boxes are separated to remove the molded item.

Fig 3a

## Description

[Field of the Invention]

This invention relates to methods of molding housings for cellular phones. More particularly, this invention relates to a method of molding a thin-walled and stronger front housing for a cellular phone with satisfactory surfaces free of molding sinks.

[Technical Background]

As the demand for cellular phones has been rapidly growing, new models with increasingly more diversified functions and lighter weight have been developed in recent years. Against this background, there is a greater need than ever for providing thinner-walled and stronger housings for cellular phones.

Generally, a housing for a cellular phone is composed of a front section accommodating push buttons and other buttons and a rear section that rests on the palm of the caller during use. The front and rear sections are separately injection-molded and later joined together. (The front section of thin-walled housing is referred to as thin-walled housing hereinafter.)

A typical thin-walled housing for a cellular phone has a low box-like shape with an approximately rectangular plate portion having a bent portion provided around the edges of the plate portion. The plate portion includes a plurality of holes to accommodate a call-receive button, push buttons, function buttons, and a call-start button. (Push buttons are those bearing numbers from 0 to 9 and other symbols mainly used for dialing. Function buttons are pressed to select various functions, such as holding and rapid dialing.) A plurality of bosses each with a tap hole for a wood screw are formed on the edges of the rear side of the plate portion.

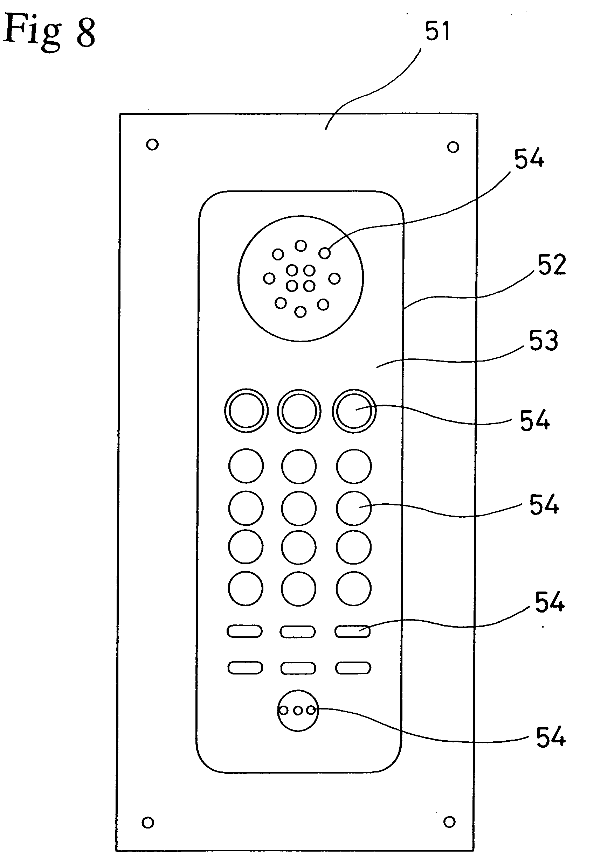

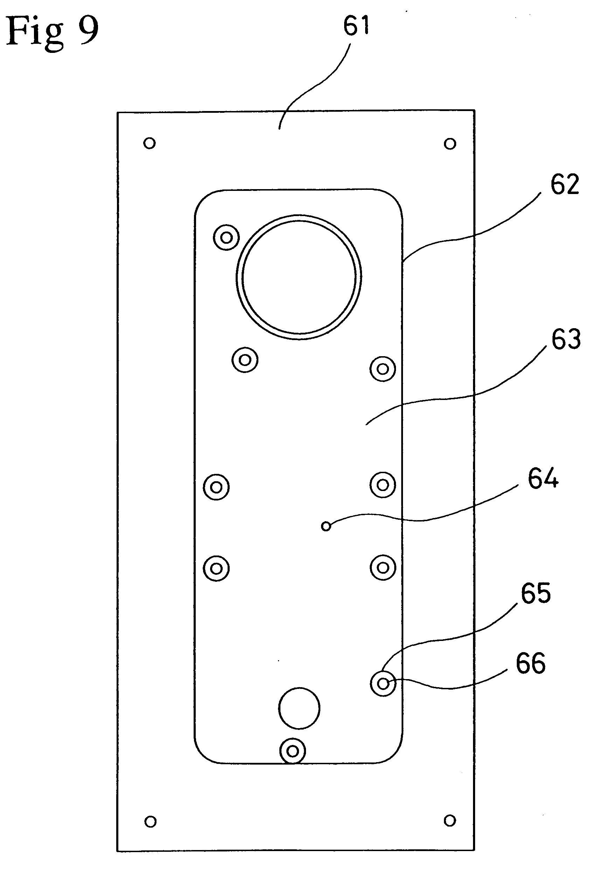

A known method of injection-molding thin-walled housing uses a pair of front and rear molds as shown in Figs. 8 and 9.

In Fig. 8, reference numeral 51 designates a front mold which includes a molding part 52. The molding part 52 in turn includes a plate forming portion 53 which has cylindrical and square-rod shaped pins 54 projected therefrom for forming holes to accommodate a call-receive button, push buttons, function buttons, and a call-start button.

In Fig. 9, reference numeral 61 designates a rear mold which includes a molding part 62. The molding part 62 in turn includes a plate forming portion 63 which contacts the top end faces of the pins 54 when the front and rear molds 51 and 61 are joined together. A pin gate 14 is provided at the approximate center of the plate forming portion 63 where it does not contact any of the hole forming pins 54. The pin gate 64 has an approximately 1.5 mm diameter for introducing resin into the cavity of the joined molds. Several thick boss forming holes 65 are formed along the edges of the plate forming portion 63. Also, hole forming pins 66 for forming wood screw tap holes are planted in the center of the boss forming holes 65.

The method of injection-molding thin-walled housings for cellular phones using molds like the aforementioned has various problems, including the following:

(1) When removing burrs from the part of the molded item that was on the pin gate, part of the thin-walled plate portion is also scraped, hence reducing the bending strength and other characteristics of the housing.
(2) A large number of weld marks
are formed around the push button holes due to the projecting pins during injection, significantly affecting the bending strength and other characteristics of the molded item.
(3) The boss portions must be of thick formation because wood screws need to be tightly fitted in. During cooling, however, molding sinks (dents) occur on the front side (the side opposite to where the bosses are formed) due to the shrinkage of the bosses caused by their greater volume than that of the adjacent part.
(4) Since a large pin gate leaves a large amount of burrs, it is preferable to use a pin gate with a small diameter. However, if the diameter is too small, the resin cannot permeate through all parts of the narrow cavity during injection. If the number of pin gates are increased to solve this problem, more weld marks are formed affecting the strength of the housing. Moreover, since the burrs at every gate must be removed, the manufacturing procedure is more complicated and troublesome, thus increasing the manufacturing cost.

[Disclosure of the Invention]

An object of the present invention is to provide a method of molding a thin-walled cellular phone housing with an greatly improved bending strength and other characteristics and a satisfactory surface free of molding sinks.

The present invention consists in a method of injection-molding a thin-walled housing for a cellular phone, the housing in a box-like shape having an approximately rectangular plate portion and bent portion provided around the edges of the plate portion, a plurality of holes formed in the plate portion for accommodating push buttons, a plurality of bosses each with a tap hole for receiving a wood screw, the bosses being formed on the rear face of the plate portion, the method comprising the steps of:

injecting resin into a cavity of a mold through a gate, the gate being located in the part of the mold that forms the front surface of the plate portion and in the position where one of the push button holes is to be formed; forming push button holes including at least one on the gate and/or function button holes in the plate portion by allowing a plurality of cylindrical members to penetrate the part of the cavity forming the plate portion approximately perpendicular to the surfaces forming the plate portion when the resin is still in a molten state so as to remove parts of the resin; and pushing hole forming members for forming wood screw tap holes in the bosses into the cavity when the resin is still in a molten state, the hole forming members being provided in the mold.

By this method, the gate is completely closed when the push button holes, including the one aligned with or on the gate, are punched upon injection of resin into the cavity of the mold. This produces a thin-walled molded item without burrs on the part of the item on the gate. Since removing such burrs are not required, there is no danger of seriously reducing the bending strength of the molded item though scraping off part of the plate portion while removing burrs.

Moreover, the extremely large gate, with a diameter the same size as that of the push button, allows injected molten resin to permeate into every part of the cavity, even if only one gate is provided and the molded item is thin. Using a single extremely large gate, this method not only produces much fewer weld marks in the molded item but also has a much higher yield rate compared with conventional injection-molding methods.

Furthermore, push buttons are formed by allowing a plurality of cylindrical members to penetrate the part of the cavity forming the plate portion approximately perpendicular to the surfaces that form the plate portion when the resin is still in a molten state. This prevents weld marks occurring around the push button holes, thus imparting a high strength to the molded item.

Also, the members for forming tap holes in the bosses are pushed into the cavity when the resin is still in a molten state, and the pressure of the resin in and around the boss portions is maintained at a high level. Therefore, no shrinkage occurs during cooling, which otherwise might result in a molding sink on the front face of the molded item.

[Brief Explanation of the Drawings]

Fig. 1 is a plan view of the front mold of an embodiment in accordance with the present invention.
Fig. 2 is a plan view of the rear mold of an embodiment in accordance with the present invention.
Figs. 3(a) and (b) are cross sectional views of the joined front and rear molds of Figs. 1 and 2 taken along line A-A.
Figs. 4(a) and (b) are cross sectional views of the joined front and rear molds of Figs. 1 and 2 taken along line B-B.
Fig. 5 is a front elevational view of a thin-walled housing for a cellular phone of the embodiment.
Fig. 6 is a rear elevational view of a thin-walled housing for a cellular phone of the embodiment.
Fig. 7 is a left side view of a thin-walled housing for a cellular phone of the embodiment.
Fig. 8 is a plan view of a conventional front mold for manufacturing a thin-walled housing for a cellular phone.
Fig. 9 is a plan view of a conventional rear mold for manufacturing a thin-walled housing for a cellular phone.

[Best Mode for Practicing the Invention]

The following is a detailed explanation of an embodiment according to the present invention with reference to the attached drawings.

Embodiment

A thin-walled housing for a cellular phone was manufactured by injection-molding liquid crystal polyester resin filled with 30 wt. % glass fiber with an injection molder manufactured by Sumitomo Heavy Industries, Ltd. The molding conditions were temperatures of 270 °C at the cylinder, 290 °C at the nozzle, and 120 °C at the mold, and an injection pressure of 1100 kgf/cm$^2$

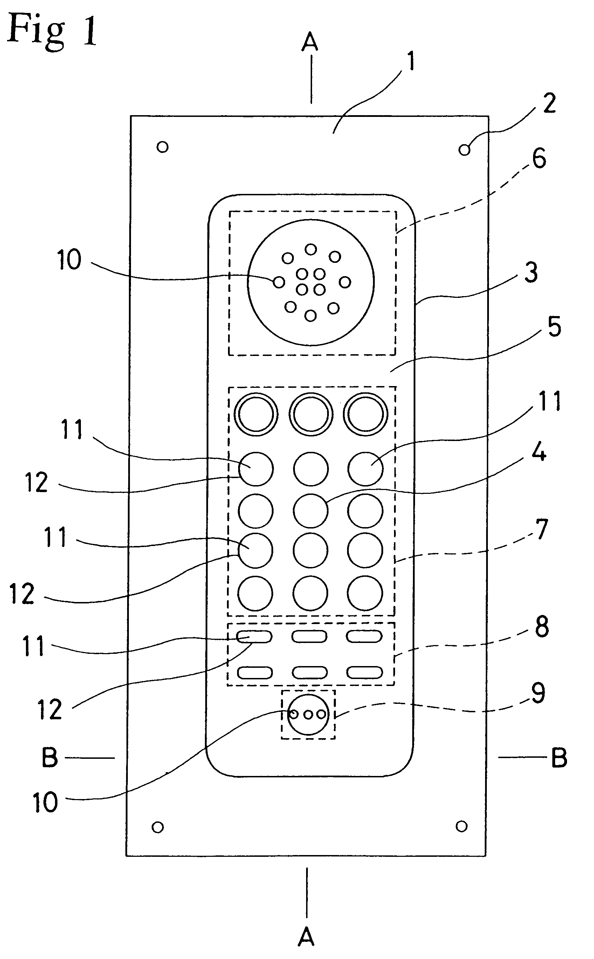

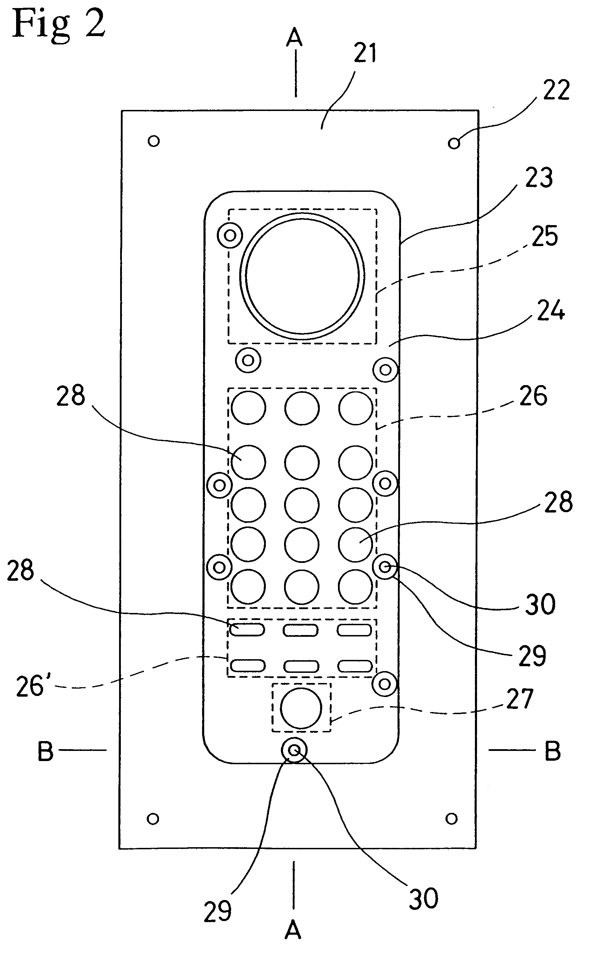

Figs. 1 and 2 are plan views of the front and rear molds, respectively, used for this injection molding.

In Fig. 1, reference numeral 1 designates the front mold including pin insertion holes 2 formed on the four corners therein for aligning the front and rear molds. Reference numeral 3 designates a molding concave. A pin gate 4 is provided on the center of the molding concave 3. The molding concave 3 also includes a plate forming portion 5, a receiver portion 6, a push button hole portion 7, a function button hole portion 8, and a transmitter portion 9. The receiver portion 6 and the transmitter portion 9 in turn have a plurality of cylindrical pins 10 erected thereon for forming speaker and microphone holes. Meanwhile, the push button hole portion 7 and the function button hole portion 8 have insertion members 11 provided thereon for forming push button holes and function button holes. The insertion members 11 can recede further into the mold as they slide into respective slide holes 12. The insertion members 11, normally located flush with the adjacent parts of the front mold 1, are configured so as to recede from the surface of the mold 1 when receiving pressure. The pin gate 4 has the same diameter as the insertion members 11 for forming push buttons.

Referring now to Fig. 2, alignment pins 22 are projected on the four corners of the rear mold 21. Reference numeral 23 designates a molding convex including a plate forming portion 24 which in turn includes a receiver portion 25, a push button hole portion 26, a function button hole portion 26', and a transmitter portion 27. Also, projectable members 28 for forming push buttons and function buttons are provided on the push button hole portion 26 and the function button hole portion 26'. The projectable members 28 are located in alignment with the insertion members 11 when the front and rear molds are joined together. The projectable members 28, normally flush with the adjacent parts of the rear mold 21, can be pushed from behind the rear mold 21 to project from the surface of the rear mold 21 into the slide holes 12, which accommodate the insertion members 11. Nine boss forming holes 29 are provided in the molding convex 23 along its edges. These holes 29 forms bosses for joining the molded front housing and the molded rear housing. Furthermore, a tap hole forming pin 30 is planted in the center of each boss forming hole 29.

The following is an explanation of the method of injection-molding using the above mold.

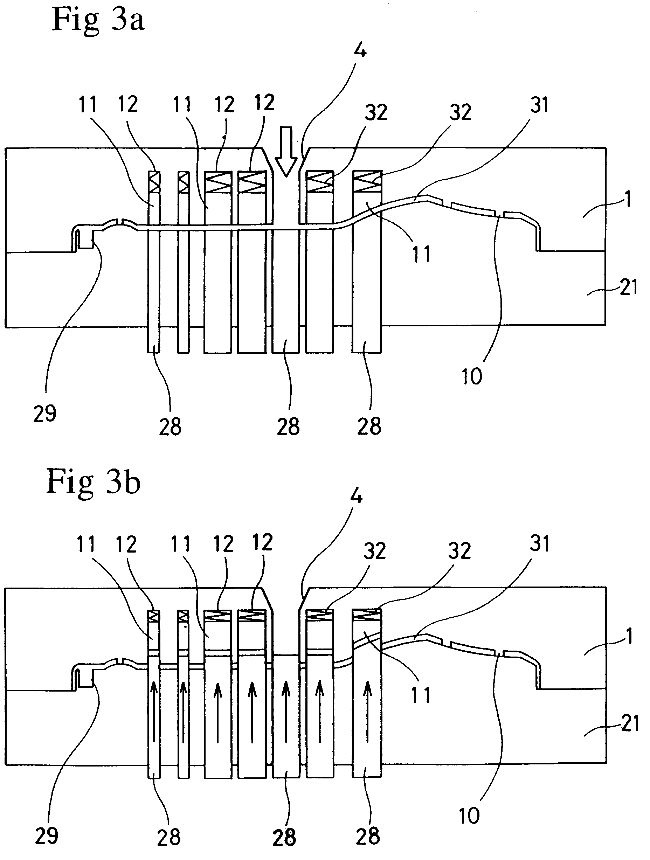

Figs. 3(a) and (b) show cross sectional views of the joined front and rear molds taken along line A-A. In this injection molding, first resin is injected through the pin gate 4 into the cavity 31 formed by the joined front and rear molds as shown in Fig. 3(a). While the resin is still in a molten state, the top portions of the projectable members 28 of the rear mold 21 are inserted through the cavity 31 into the slide holes 12, thus punching holes in the resin as shown in Fig. 3(b). At the same time, the projectable members 28 push the insertion members 11 of the front mold 1 further into the slide holes 12 via the removed resin. In this way, the push button holes and the function button holes are punched in the resin in the plate forming portion. Upon completion of each molding operation, the insertion members 11, pushed in the mold, are pushed back by springs 32, so that these members 11 are again flush with the adjacent parts of the plate forming portion 5 of the front mold 1.

Concurrently with the above, the projectable member 28 located opposite the pin gate 4 is also pushed through the cavity 31 into the pin gate 4, so that the resin in this location flows backward into the pin gate 21. In this process, a push button hole is formed on the pin gate 4 and the pin gate 4 is closed. The outer diameter of the cylindrical projectable members is made approximately the same as the inner diameter of the slide holes and the pin gate so that no burrs form on the push button holes. This push button hole forming process is completed in a very short time (0.01 to 0.5 second) upon resin injection.

As described above, since the push button holes and other holes are punched in molten resin, no weld mark is formed unlike the conventional method of injecting resin into a cavity in which pins are planted. Accordingly, the part of the plate portion surrounding the push button holes and other holes is stronger.

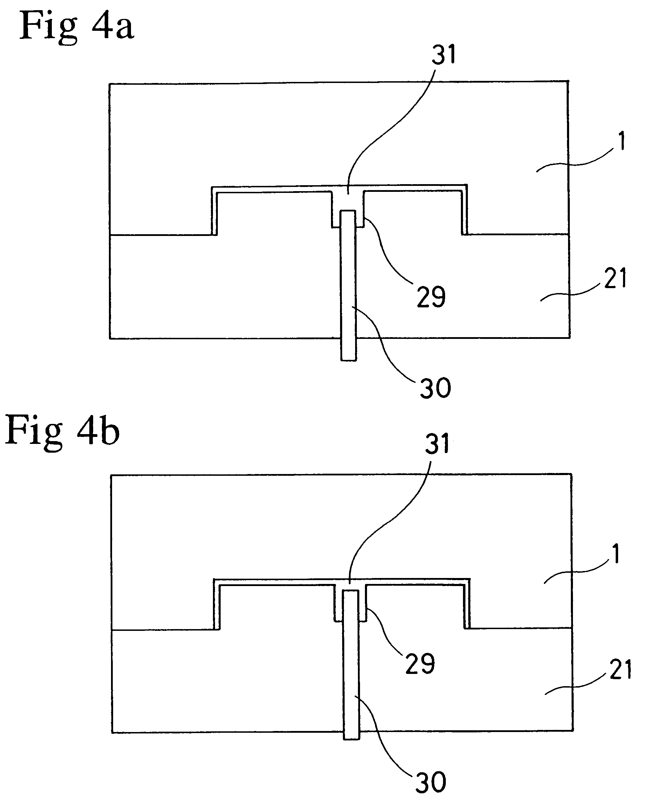

During the above process of forming bush button holes and other holes, the tap hole forming pins 30 in the boss forming holes 29 of the rear mold 20 are pushed slightly further into the cavity 31. Figs. 4(a) and (b) show cross sectional views of a boss forming part of the joined front and rear molds taken along line B-B of Figs. 1 and 2. Upon injection of molten resin into the cavity 31 as shown in Fig. 4(a), the tap hole forming pin 30 is pushed slightly into the cavity 31 as shown in Fig. 4(b). Since a high resin pressure in and around the boss portions is maintained in this step, no shrinkage or molding sink occurs during cooling.

The injected resin is cooled following the above steps of filling the cavity with resin, forming push button holes and other holes, and pushing the tap hole forming pins into the cavity. Then, the front and rear molding boxes are separated and the solidified product, i.e., the molded item, is removed to complete the injection molding process.

In this embodiment, the injection molding process was repeated ten times to manufacture ten thin-walled housings for a cellular phone.

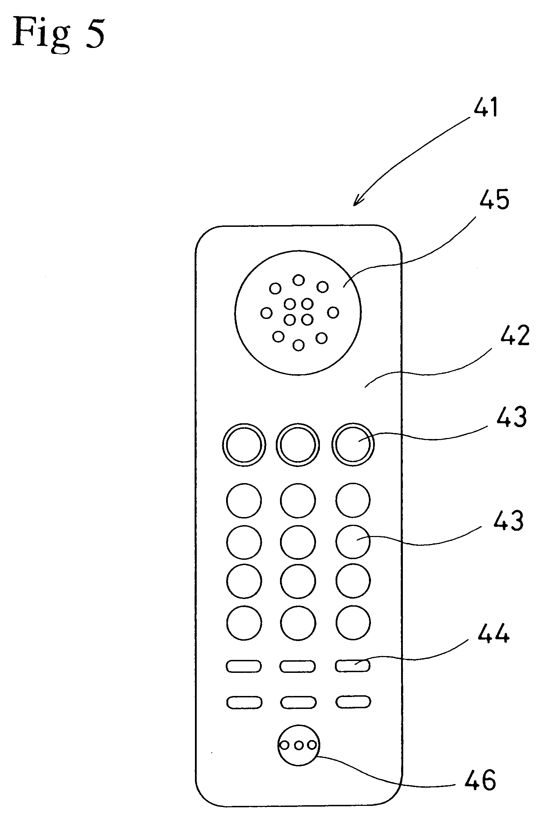

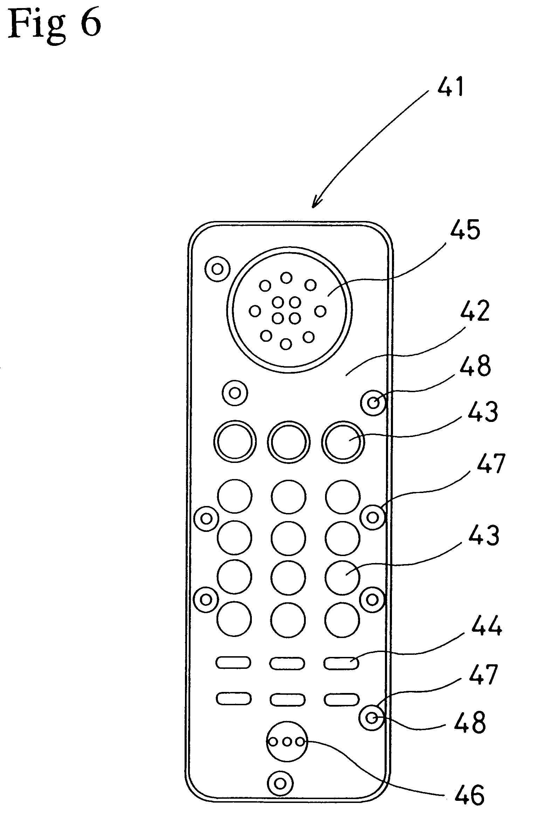

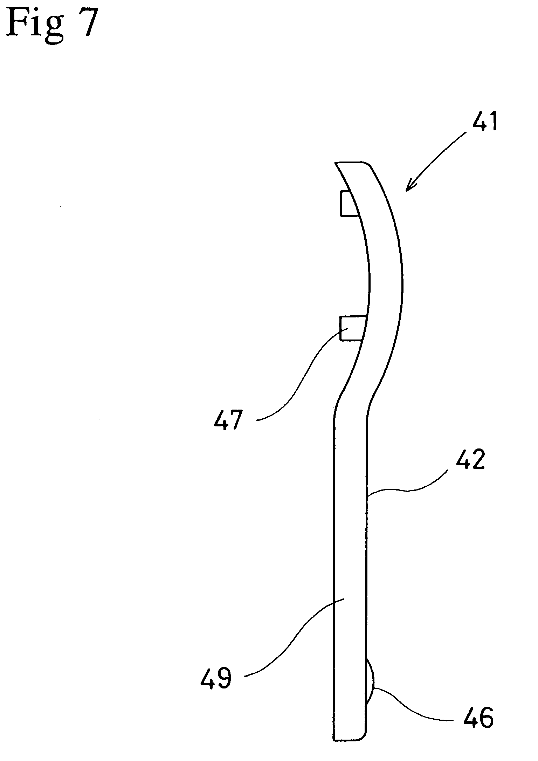

Figs. 5, 6, and 7 show, respectively, front elevational, rear elevational, and left side views of the molded item, having a height of approximately 140 mm and a width of approximately 50 mm. The bent sides 49 was approximately 8 mm wide while the plate portion 42 was approximately 0.5 mm. No burrs or weld marks were observed around the push button holes 43 or the function button holes 44. Furthermore, the molded items had an excellent visual appearance free of warpage and other problems.

After having been left in an atmosphere with a temperature of 23°C and a relative humidity of 50%, the molded items were evaluated in bending strength and molding shrinkage. Table 1 shows the result of the evaluation.

[Bending strength]

Each molded item was horizontally supported at two points close to both ends. An increasingly greater load was applied to the center of the item from above using a pressurizing wedge measuring the maximum load point at which breakage occurred. Then, the bonding strength of all ten molded items was given based on the following Equation 1 and the average was calculated:

$$S_F = 3PL_V/(2bh^2) \qquad \text{Equation 1}$$

in which "$S_F$" is the bonding strength, "$P$" is the maximum load, "$L_V$" the distance between the two supporting points, "$b$" the width of the molded item, and "$h$" the thickness of the molded item.

[Molding shrinkage]

The depth of the depression on the front surface directly opposite each of the nine bosses was measured relative to its adjacent part. Then, the nine measurements were averaged as the molding shrinkage.

[Test items]

Injection-molding was performed ten times under the same molding conditions using the conventional moldings shown in Figs. 8 and 9 and the same resin as in the embodiment to manufacture thin-walled housings for a cellular phone with the same shape as those in the embodiment. Resin failed to permeate throughout the cavity in five injections out of the ten, so that the five items were molded imperfectly with portions missing. The burrs that had been formed on the pin gate was mechanically removed.

The molded items were not good enough for use, having unsatisfactory visual appearance, particularly shrinks around the bosses.

The five molded items free of imperfections were first left in an atmosphere having a temperature of 23°C and a relative humidity of 50% and were then evaluated in terms of bending strength and molding shrinkage as in the embodiment. Table 1 shows the result of the evaluation.

TABLE 1

|  | Bending strength | Molding shrinkage |
|---|---|---|
| Embodiment items | 960 kgf/cm2 | 5 μ microns or less |
| Test items | 400 kgf/cm2 | 20 μ microns or less |

Table 1 shows that the thin-walled housing for a cellular phone molded by the method of the embodiment according to the present invention has a far greater bending strength than the one molded by the conventional method.

Although liquid crystal polyester resin filled with glass fiber was employed as the molding resin in the foregoing embodiment, other resins can be used as long as the molded item possesses a sufficient level of strength and other characteristics required for a cellular phone housing.

[Effect of the Invention]

By the injection-molding method in accordance with the present invention, no burrs are formed at the part of the molded item on the gate. Accordingly, there is no need to remove such burrs from the plate portion, which may greatly affect the bending strength of the molded item.

Since push button holes and other button holes are punched in molten resin, no weld mark is formed on these holes, resulting in a strong molded item, unlike by the conventional method.

Moreover, the molten resin in the boss forming portions is maintained at a high pressure so that no shrinkage occurs in the cooling step. This prevents molding sinks from developing on the housing surface.

Furthermore, the large-diameter gate allows molten resin to permeate the entire cavity ensuring that molded items are free of missing parts.

Therefore, a thin-walled housing for a cellular phone having a high strength and a high-quality surfaces with no molding sinks can be manufactured at a high yield rate by the injection-molding method according to the present invention.

**Claims**

1. A method of injection-molding a thin-walled housing for a cellular phone, the housing in a box-like shape having an approximately rectangular plate portion and a bent portion provided around the edges of the plate portion, a plurality of holes formed in the plate portion for accommodating push buttons, a plurality of bosses each with a wood screw tap hole, the bosses being formed on the rear face of the plate portion, the method comprising the steps of:

injecting resin into a cavity of a mold through a gate, the gate being located in the part of the mold that forms the front surface of the plate portion and in the position where one of the push button holes is to be formed; forming push button holes including at least one on the gate and/or function button holes in the plate portion by allowing a plurality of cylindrical members to penetrate the part of the cavity forming the plate portion approximately perpendicular to the surfaces forming the plate portion when the resin is still in a molten state so as to remove parts of the resin; and

pushing hole forming members for forming wood screw tap holes in the bosses into the cavity when the resin is still in a molten state, the hole forming members being provided in the mold.

# Fig 1

# Fig 2

## Fig 3a

## Fig 3b

Fig 4a

Fig 4b

Fig 5

# Fig 6

Fig 7

41

47

42

49

46

## Fig 8

# Fig 9

## INTERNATIONAL SEARCH REPORT

| International application No. |
| --- |
| PCT/JP96/00290 |

**A. CLASSIFICATION OF SUBJECT MATTER**

Int. Cl$^6$ B29C45/56, B29C45/26, H04M1/02

According to International Patent Classification (IPC) or to both national classification and IPC

**B. FIELDS SEARCHED**

Minimum documentation searched (classification system followed by classification symbols)

Int. Cl$^6$ B29C45/00-45/84, B29C33/00-33/76, H04M1/02

Documentation searched other than minimum documentation to the extent that such documents are included in the fields searched

| | |
| --- | --- |
| Jitsuyo Shinan Koho | 1926 – 1996 |
| Kokai Jitsuyo Shinan Koho | 1971 – 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 4-290714, A (Shin-Kobe Electric Machinery Co., Ltd.), October 15, 1992 (15. 10. 92) | 1 |
| Y | JP, 4-301417, A (Topy Industries Ltd.), October 26, 1992 (26. 10. 92) | 1 |
| Y | JP, 2-82511, U (NEC Home Electronics Ltd.), June 26, 1990 (26. 06. 90) | 1 |
| Y | JP, 3-284920, A (Taiyo Yuden Co., Ltd.), December 16, 1991 (16. 12. 91) | 1 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| July 24, 1996 (24. 07. 96) | July 30, 1996 (30. 07. 96) |

| Name and mailing address of the ISA/ | Authorized officer |
| --- | --- |
| Japanese Patent Office | |
| Facsimile No. | Telephone No. |

Form PCT/ISA/210 (second sheet) (July 1992)